# EUROPÄISCHE PATENTSCHRIFT

(11) **EP 0 947 361 B1**
(45) Veröffentlichungstag und Bekanntmachung des Hinweises auf die Patenterteilung: **15.03.2006**
(21) Anmeldenummer: 99106446.0
(22) Anmeldetag: 29.03.1999
(51) Int. Cl.: B60G 15/12, F16F 9/06

(54) **Hydropneumatisches Federbein**
Hydro-pneumatic suspension strut
Jambe de suspension hydropneumatique

(30) Priorität: 01.04.1998 DE 19814549
(43) Veröffentlichungstag der Anmeldung: 06.10.1999
(73) Patentinhaber: ContiTech Luftfedersysteme GmbH, 30165 Hannover (DE)
(72) Erfinder: Leno, Valerij, 30167 Hannover (DE); Altsinger, Roland, Dr., 31303 Burgdorf (DE)

(56) Entgegenhaltungen:
- FR-A- 595 592
- FR-A- 2 679 306
- GB-A- 821 230
- US-A- 2 536 626
- US-A- 3 178 167
- US-A- 4 226 408
- US-A- 4 588 171

## Beschreibung

Die Erfindung betrifft ein hydropneumatisches Federbein, wie es zur Abfederung der Aufbauten von PKWs, LKWs, Omnibussen und Anhängern dienen kann, gemäß dem Oberbegriff der Ansprüche 1 und 2.

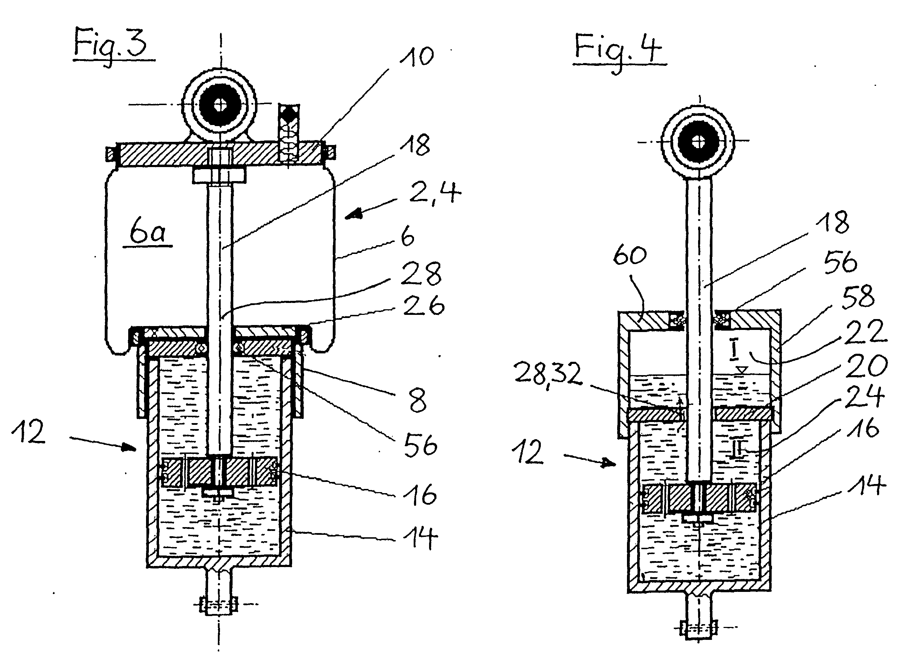

Eine solche Luftfeder/Stoßdämpfereinheit, ein sogenanntes "Gasfederbein", ist in verschiedenen Ausführungsformen bekannt (siehe z. B. DE 35 26 156 A1, DE 38 10 011 und US 4,325,541) und wird exemplarisch anhand der Fig. 3 beschrieben.
Bezüglich des in Betracht zu ziehenden Standes der Technik nicht unerwähnt bleiben soll ein mit "Prallscheibe" versehener Stoßdämpfer (Fig. 4).

Als nächster Stand der Technik wird ein hydropneumatisches Federbein nach GB-A-821 230 angesehen.

Alle konventionellen Gasfederbeine haben getrennte Druckräume, die mit Druckluft bzw. einem hydraulischen Medium beaufschlagt werden. Dabei gibt es ein Problem bezüglich der Abdichtung der für die Kolbenstange vorgesehenen Durchführungen.
Um die erforderliche Dichtheit der relativ zur Kolbenstange bewegbaren Kolbenkammer zu erreichen (z. B. erforderliche Induktionshärtung bei HCR 56 ± 4, Schleifen und Polieren bei einer Rautiefe von Rₜ ≤ 0,2 µm, mindestens 20 µm Hartchrombeschichtung, um eine Oberflächenhärte von HCR 70 ± 2 zu erzielen) ergeben sich bei den herkömmlichen druckbelasteten Dämpfern hohe Herstellkosten.

Wegen des Verschleißes dieser Dichtung ist auch die Nutzungsdauer des Dämpfers, bzw. des hydropneumatischen Federbeins, begrenzt.

Die Aufgabe der Erfindung, die im wesentlichen gemäß Anspruch 1 bzw. 2 gelöst ist, besteht in der Überwindung dieser Mißstände, d. h. es soll ein hydropneumatisches Federbein geschaffen werden, das praktisch frei ist von dem Verschleiß der beweglichen Teile und wobei die Herstellungskosten wegen der damit wegfallenden Bearbeitungsverfahren gesenkt werden können.

Gemäß des Vorschlags der Erfindung wird in dem Dämpferzylinder eine Zwischenwand eingezogen. Eine Abdichtung der oberen Platte des Gasfederkolbens gegenüber der Kolbenstange kann damit entfallen.
Die eingezogene Scheibe bzw. Wand hat eine Prallaufnahmewirkung für das aufgewirbelte Medium.

Bei Neigungen des Gasfeder<dämpfer>beines verhindert die Prallscheibe ein Fließen des hydraulischen Mediums in den Gasfederbalg.

Der zusätzliche, mittlere Raum <I> kann in seinem Volumen derart ausgenutzt werden, daß bei Zuführung von weiterem hydraulischem Medium über einen Hydraulikanschluß eine Niveauregulierung bzw. eine Niveauerhöhung stattfinden kann.

Es ist denkbar, im Gasfederbalg ein abgeschlossenes Gasvolumen zu fixieren. Das Gasfederbein wird dann lediglich über die Veränderung der Menge des hydraulischen Dämpfungsmediums beeinflußt. Hierzu kann die hydraulische Pumpe einer Servolenkung in Anspruch genommen werden. Das eingeschlossene Gas des Gasfederbalgs brauchte nur bei Inspektionen überprüft zu werden. Damit entfiele das Anordnen eines Gasfeder-Kompressors. Der Nachteil bestände darin, daß das Gasfeder (dämpfer) bein dann eine größere Bauhöhe aufweisen würde.
D. h.: Die Verwendung des vorgeschlagenen hydropneumatischen Federbeines ermöglicht die Niveauregulierung eines Wagens sowohl durch Druckänderung des Gases im Gasfederbalg als auch durch Änderung der Hydraulikflüssigkeitsmenge im Dämpfer (z. B. mit Anwendung der serienmäßigen Hydraulikpumpe einer Servolenkung oder einer extra eingebauten Hydraulikpumpe).

Durch eine Änderung des Zusatzvolumens des Gases im Dämpfer können auch die Eigenschaften der Federung an Fahrbedingungen angepaßt werden.

Die Erfindung wird anhand zweier Ausführungsbeispiele näher beschrieben. Es zeigt:
Fig. 1 einen Längsschnitt durch ein erfindungsgemäßes hydropneumatisches Federbein mit integriertem Einrohrdämpfer;
Fig. 2 ein erfindungsgemäßes Federbein mit integriertem Zweirohrdämpfer, (ebenfalls) im Längsschnitt;
Fig. 3 eine Prinzipdarstellung eines herkömmlichen hydropneumatischen Federbeins; und
Fig. 4 einen herkömmlichen druckbelasteten Einrohrdämpfer ohne Trennkolben, beide jeweils ebenfalls im Längsschnitt.

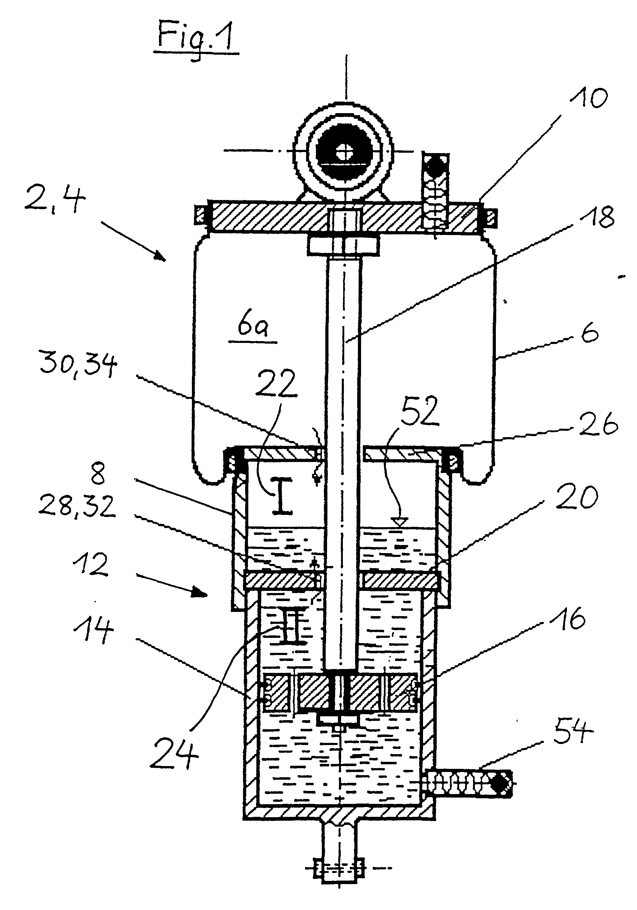

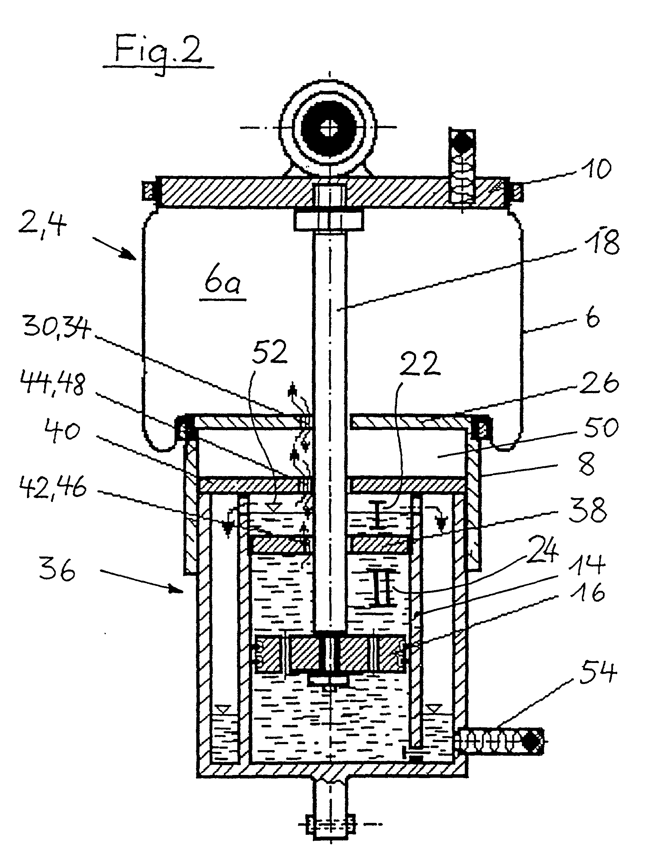

Die Fig. 1 und Fig. 2 zeigen jeweils eine Gasfeder/Stoßdämpfereinheit (hydropneumatisches Federbein) 2 mit einem elastomeren Gasfederbalg 6. Zwischen dem Gasfederbalg-Deckel 10 der Gasfeder 4 und dem Dämpferkolben 16 eines in dem Gasfederbein 2 koaxial angeordneten hydraulischen Stoßdämpfers 12 besteht über eine Kolbenstange 18 eine feste Verbindung. Der Gasfederkolben 8, wiederum, ist an dem Zylinder 14 des Dämpfers 12 befestigt. Die zur "Führung" der Kolbenstange 18 in der dem Federbalg 6 zugewandten "oberen" Platte 26 des Gasfederkolbens 8 vorgesehene Durchführungsöffnung 30 weist einen Verbindungsspalt 34 auf, der eine Verbindung zwischen dem Gasfedervolumen 6a des Gasfsderbalges 6 und Gas- und Flüssigkeitsräumen (I) und (II) 22 und 24 des Stoßdämpfers 12 herstellt und zum Druckausgleich zwischen Gasfederbalg 6 und Dämpferkammern 22 und 24 bzw. zur Rückführung von Hydraulikflüssigkeit in den Dämpfer 12 dient.

Durch die hohen Dämpfungsdrücke wird eine hohe Aufwirbelung des Dämpfungsmediums bewirkt. Ohne Prallscheibe könnte es zu einem Vermischen von Gas und Flüssigkeit bei hohen Frequenzen kommen.
Wird das Gasfeder (dämpfer) bein 2 auf Zug beansprucht, wandert der Dämpferkolben 16 nach oben. Es entsteht ein Unterdruck unter dem Kolben 16.

Ein Verschäumen des sich in der Gasfeder 4 befindlichen Gases mit der Olfüllung des Arbeitsraumes <II> 24 des Dämpfers 12 wird durch eine Prallscheibe 20 verhindert, die die von dem Dämpferkolben 16 kommenden und an der Zylinderwand hochschießenden Olstrahlen sowohl ablenkt als auch bremst.
Der Flüssigkeitsspiegel 52 der Hydraulikflüssigkeit muß immer über der Prallscheibe 20 stehen.

Ähnlich wie die obere Abschlußplatte 26 des Gasfederkolbens 8, so weist auch die Prallscheibe 20 mittig eine öffnung 28 zur "Führung" der Kolbenstange 18 auf. Auch hier gibt es einen Verbindungsspalt 32 für den Hydraulikflüssigkeitsdurchgang.
Beinm Hin- und Herbewegen des Kolbens 16 in der Stoßdämpferkammer (Teilraum (II) 24) wird Schwingungsenergie in Wärme umgewandelt.

Der Strömungswiderstand der Hydraulikflüssigkeit hängt von den Bohrungen oder Ventilen ab. Durch eine Veränderung der Bohrungen ist eine Anpassung der Dämpfungswirkung an die Fahreigenschaft möglich.
In seinem unteren Bereich weist der Stoßdämpfer 12 einen Hydraulikanschluß 54 auf.

Aus der Kombination einer Gasfeder 4 und einem hydraulischen Teleskop-Stoßdämpfer mit den obengenannten Konstruktionsmerkmalen ergibt sich ein hydropneumatisches Federbein 2.
Als Stoßdämpfer kann sowohl das Prinzip des hydraulischen Einrohr- 12 (Fig. 1) als auch das Prinzip des hydraulischen Zweirohr-Teleskopstoßdämpfers 36 (Fig. 2) zum Einsatz gelangen.

Im Unterschied zu dem in Fig. 1 dargestellten Federbein 2 mit Einrohrstoßdämpfer 12 weist der im Federbein 2 der Fig. 2 dargestellte Zweirohrstoßdämpfer 36 zwei Prallscheiben 38 und 40 auf, wobei zwischen oberer Prallscheibe 38 und Gasfederkolben 8 ein weiterer Gasraum 50 gebildet wird.

Auch die Prallscheiben 38 und 40 haben Durchführungsöffnungen 42 und 44 für die Kolbenstange 18, die erfindungsgemäß jeweils einen Verbindungsspalt 46 und 48 freilassen.

Eine herkömmliche Konstruktion (Fig. 3) eines aus Gasfeder 4 und Stoßdämpfer 12 bestehenden hydropneumatischen Federbeins 2 weist in der Regel folgende Bauteile auf: Einen Gasfederbalg 6 aus Elastomer und einen Gasfederkolben 8, der relativ zu einem Deckel 10 bewegbar ist. Koaxial innerhalb der Gasfeder 4 befindet sich der Stoßdämpfer 12, dessen Kolben 16 über eine Kolbenstange 18 an dem Deckel 10 der Gasfeder 4 befestigt ist, während der Zylinder 14 fest mit dem Gasfederkolben 8 verbunden ist. Um zu vermeiden, daß Dämpferflüssigkeit in den Gasfederraum 6a gelangen kann, befindet sich in der Durchführungsöffnung des Gasfederkolbens 8 eine Dichtung 56 für die dadurchbewegbare Kolbenstange 18.

Der in Fig. 4 gezeigte herkömmliche druckbelastete Einrohrstoßdämpfer 12 ohne Trennkolben besteht im wesentlichen aus einem Dämpferzylinder 14 und einem mit Kolbenstange 18 versehenen Kolben 16. Der Stoßdämpfer 12 ist um ein Oberteil 58 erweitert, das durch eine Prallscheibe 20 von dem (restlichen) Dämpferzylinder 14 getrennt ist.
Das Dämpfervolumen besteht aus dem Gasraum <I> 22 und dem Hydraulikflüssigkeitsraum (II) 24. Sowohl die Prallscheibe 20 als auch die obere Abschlußplatte 60 des Oberteils 58 des Dämpfers 12 weisen jeweils eine öffnung zur Durchführung der Kolbenstange 18 auf. Die Durchführungsöffnung des Oberteils 58 ist mit einer Dichtung 56 versehen.

### Bezugszeichenliste

- 2: Gasfeder/Stoßdämpfereinheit, hydropneumatisches Federbein
- 4: Gasfeder
- 6: Gasfederbalg
- 6a: Gasfedervolumen
- 8: Gasfederkolben
- 10: Gasfederbalg-Deckel
- 12: (Einrohr-)Staßdämpfer
- 14: Dämpferzylinder
- 16: Dämpferkolben
- 18: Kolbenstange
- 20: Prallscheibe
- 22: Teilraum I des Dämpfervolumens
- 24: Teilraum II des Dämpfervolumens
- 26: Kolbenplatte
- 28: Durchführungsöffnung in der Prallscheibe
- 30: Durchführungsöffnung in der Gasfederkolbenplatte
- 32: Verbindungsspalt in der Prallscheibe
- 34: Verbindungsspalt in der Gasfederkolbenplatte
- 36: Zweirohrstoßdämpfer
- 38, 40: Prallscheiben des Zweirohrstoßdämpfers
- 42, 44: Durchführungsöffnungen in den Prallscheiben 38, 40
- 46, 48: Verbindungsspalt
- 50: Gasraum zwischen oberer Prallscheibe 40 und Gasfederkolben (platte)
- 52: Flüssigkeitsspiegel
- 54: Hydraulikanschluß
- 56: Dichtung
- 58: Oberteil
- 60: Abschlußplatte

## Patentansprüche

1. Hydropneumatisches Federbein (2),
zur Abfederung der Aufbauten von PKW's, LKW's, Omnibussen und Anhängern,
mit einer Gasfederbalg (6), Gasfederkolben (8) und Gasfederbalg-Deckel (10) umfassenden Gasfeder (4),
und mit einem koaxial in der Gasfeder (4) angeordneten, einen Dämpferzylinder (14), Dämpferkolben (16) und Kolbenstange (18) umfassenden Stoßdämpfer (12),
**dadurch gekennzeichnet,**
**daß** sich innerhalb des Dämpferzylinders (14) eine Prallscheibe (20) befindet,
die das Volumen des Dämpfers (12) in zwei Teilräume I und II (22 und 24) teilt,
und wobei in der Prallscheibe (20) und in der Kolbenplatte (26) des Gasfederkolbens (8) jeweils Durchführungsöffnungen (28, 30) für die Kolbenstange (18) des Stoßdämpfers (12) vorgesehen sind,
die jeweils einen Verbindungsspalt (32 und 34) zwischen Gas- und Hydraulikflüssigkeitsräumen (6a, 22 und 24) aufweisen.

2. Hydropneumatisches Federbein nach dem Oberbegriff des Anspruchs 1,
**dadurch gekennzeichnet,**
**daß** der Stoßdämpfer ein Zweirohrstoßdämpfer (36) ist, der zwei Prallscheiben (38, 40) aufweist,
wobei sowohl in der Kolbenplatte (26) des Gasfederkolbens (8) als auch in den Prallscheiben (38, 40) jeweils Durchlaßöffnungen (30, 42, 44) für die Kolbenstange (18) des Stoßdämpfers (36) vorgesehen sind,
die jeweils einen Verbindungsspalt (34, 46, 48) zwischen Gas- und Hydraulikflüssigkeitsräumen (6a, 22, 24, 50) aufweisen.

3. Hydropneumatisches Federbein.nach Anspruch 1 oder 2,
**dadurch gekennzeichnet,**
**daß** der obere, dem Gasfedervolumen (6a) zugewandte Teilraum I (22) des Stoßdämpfers (12 bzw 36) teilweise mit Hydraulikflüssigkeit gefüllt ist,
wobei sich der Flüssigkeitsspiegel (52) zwischen Prallscheibe (20 bzw. 38) und Kolbenplatte (30) befindet.

4. Hydropneumatisches Federbein nach einem der vorhergehenden Ansprüche,
**dadurch gekennzeichnet,**
**daß** der Stoßdämpfer (12 bzw. 36) einen Hydraulikanschluß (54) aufweist.

## Claims

1. Hydropneumatic suspension strut (2), for spring-mounting of the superstructures of passenger vehicles, lorries, buses and trailers,
having a pneumatic spring (4) comprising pneumatic spring bellows (6), pneumatic spring piston (8) and pneumatic spring bellows cover (10),
and having a shock absorber (12) disposed coaxially in the pneumatic spring (4) and comprising an absorber cylinder (14), absorber piston (16) and piston rod (18),
**characterized in that**
within the absorber cylinder (14) there is a baffle plate (20), which divides the volume of the absorber (12) into two sub-chambers I and II (22 and 24)
and wherein in the baffle plate (20) and in the piston plate (26) of the pneumatic spring piston (8) there are respectively provided lead-through openings (28, 30) for the piston rod (18) of the shock absorber (12), which respectively have a connecting gap (32 and 34) between gas and hydraulic fluid chambers (6a, 22 and 24).

2. Hydropneumatic suspension strut according to the preamble to Claim 1,
**characterized in that**
the shock absorber is a twin-tube shock absorber (36) having two baffle plates (38, 40),
wherein both in the piston plate (26) of the pneumatic spring piston (8) and in the baffle plates (38, 40) there are respectively provided passage openings (30, 42, 44) for the piston rod (18) of the shock absorber (36),
which respectively have a connecting gap (34, 46, 48) between gas and hydraulic fluid chambers (6a, 22, 24, 50).

3. Hydropneumatic suspension strut according to Claim 1 or 2,
**characterized in that**
the upper sub-chamber I (22) of the shock absorber (12 or 36), which sub-chamber faces the pneumatic spring volume (6a), is partially filled with hydraulic fluid, the fluid level (52) being situated between the baffle plate (20 or 38) and the piston plate (30).

4. Hydropneumatic suspension strut according to one of the preceding claims,
**characterized in that**
the shock absorber (12 or 36) has a hydraulic connection (54).

## Revendications

1. Jambe de suspension hydropneumatique (2), destinée à la suspension sur ressorts du châssis de voitures automobiles, de camions, d'autocars ou autobus et de remorques, munie d'une part d'un amortisseur pneumatique (4) composé d'un soufflet d'amortisseur pneumatique (6), d'un piston d'amortisseur pneumatique (8) et d'un couvercle de soufflet d'amortisseur pneumatique (10), et d'autre part d'un amortisseur (12) disposé coaxialement dans l'amortisseur pneumatique (4) et comprenant un cylindre d'amortisseur (14), un piston d'amortisseur (16) et une tige de piston (18), **caractérisée en ce qu'**elle comprend :
un disque de fin de course (20) à l'intérieur du cylindre d'amortisseur (14), ledit disque de fin de course divisant le volume de l'amortisseur (12) en deux espaces I et II (22 et 24),
des ouvertures de passage (28, 30) pour la tige de piston (18) de l'amortisseur (12) étant prévues tant dans le disque de fin de course (20) que dans le disque (26) du piston d'amortisseur pneumatique (8),
ces ouvertures présentant un interstice (32 ou 34) respectif qui relie l'espace destiné au liquide hydraulique à l'espace destiné au gaz (6a, 22 et 24).

2. Jambe de suspension hydropneumatique selon la revendication 1, **caractérisée en ce que** l'amortisseur est un amortisseur à deux étages (36) qui présente deux disques de fin de course (38, 40) dotés des ouvertures de passage (30, 42, 44) pour la tige de piston (18) de l'amortisseur (36) tant dans le disque (26) du piston de l'amortisseur pneumatique (8) que dans les plaques de fin de course (38, 40), ces ouvertures présentant un interstice (34, 46, 48) respectif qui relie l'espace destiné au liquide hydraulique et l'espace destiné au gaz (6a, 22, 24, 50).

3. Jambe de suspension hydropneumatique selon les revendications 1 et 2, **caractérisée en ce que** l'espace partiel supérieur I (22) de l'amortisseur (12 ou 36) tourné vers le volume de gaz de l'amortisseur pneumatique (6a) est en partie rempli de liquide hydraulique, le niveau de liquide (52) étant situé entre le disque de fin de course (20 ou 38) et le disque de piston (30).

4. Jambe de suspension hydropneumatique selon l'une des revendications précédentes, **caractérisée en ce que** l'amortisseur (12 ou 36) présente un raccordement hydraulique (54).
